# EUROPEAN PATENT SPECIFICATION

(11) **EP 1 584 394 B1**
(45) Date of publication and mention of the grant of the patent: **22.08.2012**
(21) Application number: 05251809.9
(22) Date of filing: 23.03.2005
(51) Int. Cl.: B23H 1/10

(54) **Flushing and filtering system for electroerosion machining**
Spül- und Filtersystem für die Elektroerosionsbearbeitung
Système de lavage et filtrage pour l'usinage par électroérosion

(30) Priority: 30.03.2004 US 708879
(43) Date of publication of application: 12.10.2005
(73) Proprietor: GENERAL ELECTRIC COMPANY, Schenectady, NY 12345 (US)
(72) Inventor: Wei, Bin, Mechanicville, New York 12118 (US); Lamphere, Michael Scott, Hooksett, New Hampshire 03106 (US); Yuan, Renwei, Shanghai 200030 (CN); Ji, Andy, Shanghai 200092 (CN)
(74) Representative: Illingworth-Law, William Illingworth

(56) References cited:
- EP-A- 0 547 801
- US-A- 5 221 467
- US-B1- 6 576 858
- PATENT ABSTRACTS OF JAPAN vol. 014, no. 203 (M-0966), 25 April 1990 (1990-04-25) & JP 02 041819 A (SHIZUOKA SEIKI CO LTD), 13 February 1990 (1990-02-13)
- PATENT ABSTRACTS OF JAPAN vol. 011, no. 086 (M-572), 17 March 1987 (1987-03-17) & JP 61 241022 A (INOUE JAPAX RES INC), 27 October 1986 (1986-10-27)
- PATENT ABSTRACTS OF JAPAN vol. 010, no. 189 (M-494), 3 July 1986 (1986-07-03) & JP 61 033820 A (INOUE JAPAX RES INC), 17 February 1986 (1986-02-17)
- PATENT ABSTRACTS OF JAPAN vol. 013, no. 469 (M-883), 24 October 1989 (1989-10-24) & JP 01 183317 A (AMADA CO LTD), 21 July 1989 (1989-07-21)

## Description

The present disclosure relates generally to electroerosion machines and, more particularly, to a flushing and filtering system for electroerosion machines.

Electroerosion machining is a process in which an electrically conductive metal workpiece is shaped by removing material through melting or vaporization by electrical sparks and arcs. The spark discharge and transient arcs are produced by applying controlled direct current between the workpiece (typically anodic or positively charged) and the tool or electrode (typically the cathode or negatively charged). The end of the electrode and the workpiece are separated by a spark gap from about 0.01 millimeters to about 0.50 millimeters, and are immersed in or flooded by a dielectric fluid or an electrolyte fluid. The fluid in the gap is partially ionized under the DC voltage (pulsed or continuous), thus enabling a spark discharge or transient arc to pass between the tool and the workpiece. Each spark and/or arc produces enough heat to melt or vaporize a small quantity of the workpiece, thereby leaving a tiny pit or crater in the work surface.

Electroerosion machining is also non-contact or minimum-contact machining process that can quickly shape any electrically conductive material regardless of the hardness or toughness of the material. In the electroerosion process, a substantial amount of material is removed from the metal workpiece. Metal chips are deposited at the bottom of a working tank and subsequently rolled by high pressure flushing. Without adequate filtration, these rolled chips can be pumped back into the machining zone and generate secondary discharge or arcing between the electrode and the workpiece, thereby affecting process stability and surface integrity as well as geometry accuracy.

At present, existing EDM-type filtration and flushing systems that are adopted for electroerosion machines do not have sufficient filtration systems associated therewith.

US 5,221,467 discloses a filtration apparatus for filtering a machining solution. A return pipe leads from a second filtration tank to a pair of confronting nozzles which supply machining solution to the workpiece.

The above discussed and other drawbacks and deficiencies of the prior art are overcome or alleviated by a flushing and filtering system for an electroerosion machine.

The present invention provides a flushing and filtering system in accordance with claim 1.

Embodiments of the invention will now be described, by way of example, with reference to the accompanying drawings, in which:
Figure 1 is schematic diagram of a flushing and filtering system suitable for use with electroerosion machines, in accordance with an embodiment of the invention; and
Figure 2 is schematic diagram of an alternative embodiment of the flushing and filtering system shown in Figure 1.

Disclosed herein is a novel flushing and filtering system for electroerosion machines, in which two separate filtering stages ("rough" and "fine") are implemented. Each filtering stage has a separate filtering tank associated therewith, and a pump to transfer the roughly filtered machining fluid to the fine filtering tank from the rough filtering tank. Moreover, the fine filtered stage further features two fluid return paths, including an additional fluid adding pump in addition to a high-pressure pump for fluid return directly to the tool itself.

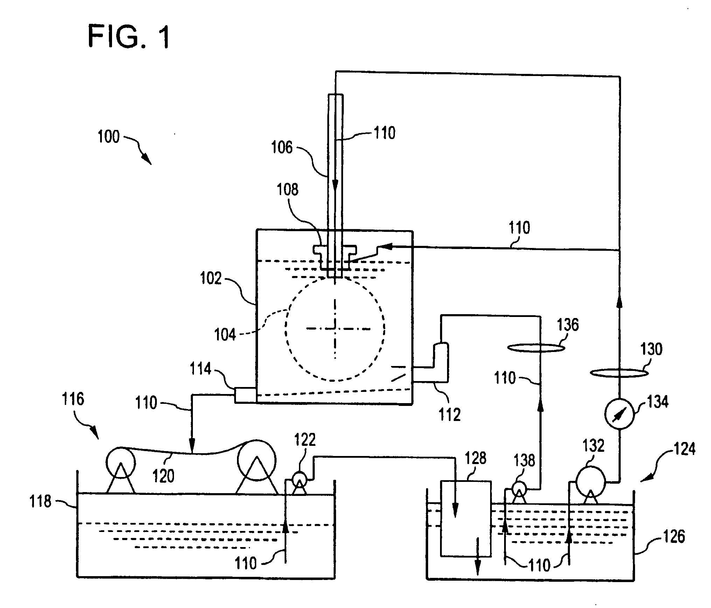

Referring now to Figure 1, there is shown a schematic diagram of a flushing and filtering system 100 suitable for use for electroerosion machines, in accordance with an embodiment of the invention. As is shown, a work tank 102 contains workpiece 104 that is to be milled, shaped or otherwise machined by an electroerosion process. To this end, an electrode 106 is configured in close proximity to the workpiece 104 through a guide bush 108. As is known in the art, the electrode 106 has a machining liquid 110 continuously circulated at high pressure therethrough and introduced into a gap between the electrode 106 and the workpiece 104 for facilitating the machining operation.

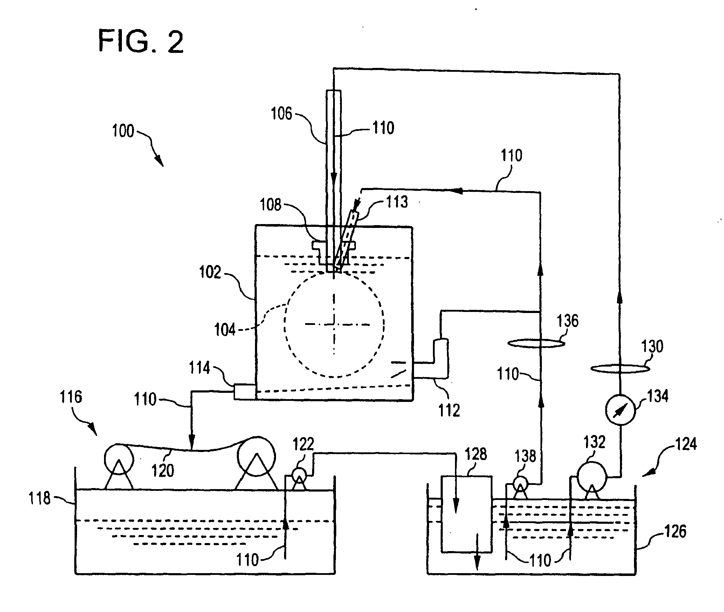

In addition to being circulated through the electrode center, the machining liquid 110 is also supplied to the guide bush for exterior flushing of contaminants. A liquid adding inlet 112 at the lower portion of the work tank 102 receives machining liquid 110 from a separate input path from that supplying the electrode 106 and guide bush 108, as described in greater detail hereinafter. Sufficient machining liquid 110 is introduced into the work tank 102 to as to maintain the workpiece 104 and guide bush 108 in a substantially submerged condition during the machining process. In an alternative embodiment depicted in Figure 2, a liquid adding outlet/nozzle 113 is configured proximate the top of the work tank 102 for receiving machining liquid 110 and spraying or flushing the machining liquid 110 to the machining area from an up-down or side-to-side direction between the workpiece 104 and electrode 106. In other words, in lieu of being submerged in machining liquid 110, the nozzle may be used to spray the exterior of the guide bush 108 and the workpiece 104.

In either case, the residue-containing machining liquid 110 exits the bottom of the work tank 102 from outlet 114, and is directed to a first (rough) filtering stage, generally designated at 116. In order to facilitate the sweeping away of metallic chip residue, the bottom of the work tank 102 may be downwardly sloped or inclined toward outlet 114. The first filtering stage 116 includes a first (rough) filtering tank 118, rough filtering device 120 and a rough filtering pump 122 for transferring the resulting roughly filtered machining liquid 110 to a second (fine) filtering stage 124.

The second filtering stage 124 includes a second (fine) filtering tank 126 in which there is included a fine filtering device 128 for receiving the roughly filtered machining liquid 110 from the first filtering stage 116. Two separate exit fluid return paths are used to transfer the resulting finely filtered machining liquid back through the tool electrode 106 and into the work tank 102. A first fluid return path is a high-pressure fluid path 130 that includes a high-pressure pump 132 and optional pressure sensor 134 for circulating the finely filtered machining liquid 110 through the electrode 106 and to the guide bush 108. A second fluid return path 136 includes a liquid adding pump 138 that supplies finely filtered machining liquid 110 through the liquid adding inlet 112 at the lower portion of the work tank 102.

In operation of the flushing and filtering system 100, the liquid adding pump 138 is turned on to add finely filtered machining fluid (e.g., dielectric, electrolyte) into the work tank 102. When both the workpiece 104 and the guide bush 108 are submerged into the machining fluid 110, the high pressure pump 132 is turned on, and the normal electroerosion machining cycle starts. At the same time, the outlet 114 is opened while the rough filtering pump 122 between the rough and fine filtering tanks is turned on, causing the system 100 to begin the flushing and filtering cycle. During machining of the workpiece 104, the resulting metallic chips are swept away from the workpiece 104 and out of the work tank 102 due to the sloped bottom surface of the work tank 102 and continuous addition of machining fluid 110 through at least two different fluid paths. This also helps to ensure each workpiece is machined under the same conditions, as well as to reduce secondary discharge by the chips. Thus, both process stability and part quality is improved.

## Claims

1. A flushing and filtering system (100) for an electroerosion machine, comprising:
a work tank (102) configured to maintain a workpiece (104) therein;
a first filtering stage (116) for roughly filtering residue-containing machining liquid (110) exiting from said work tank (102); and
a second filtering stage (124) for finely filtering roughly-filtered machining liquid (190) exiting from said first filtering stage (116);
a high pressure pump (132) for supplying finely filtered machining liquid along a first fluid return path (130) from the second filtering stage to said work tank (102), said first fluid return path (130) comprising a high-pressure return path for introducing finely-filtered machining fluid through an electrode (106) included in the electroerosion machine; **characterised in that**
a liquid adding pump (138) is provided for supplying finely filtered machining liquid along a second fluid return path (136) from the second filtering stage to said work tank (102), said second fluid return path (136) introducing said finely-filtered machining fluid through a liquid adding inlet (112) disposed at a lower portion of said work tank (102), and wherein a bottom surface of said work tank (102) is sloped so as to cause said residue-containing machining liquid (110) to run toward an outlet (114) proximate the bottom of said work tank (102).

2. The flushing and filtering system (100) of claim 1, wherein said first filtering stage (116) further comprises:
a rough filtering device (120) for receiving residue-containing machining liquid (110) exiting from said work tank (102);
a first filtering tank (118) for holding said roughly-filtered machining liquid (110) passed through said rough filtering device (120); and
a rough filtering pump (122) for transferring said roughly-filtered machining liquid (110) from said first filtering tank (118) to said second filtering stage (124).

3. The flushing and filtering system (100) of claim 2, wherein said second filtering stage (124) further comprises:
a fine filtering device (128) for receiving said roughly-filtered machining liquid (110) transferred from said first filtering tank (118); and
a fine filtering tank (126) for holding said finely-filtered machining liquid (110) passed through said fine filtering device (128).

4. The flushing and filtering system (100) of any of claims 1 to 3, wherein said first fluid return path (130) is further configured so as to provide said finely filtered machining liquid (110) to a guide bush (108), said guide bush (108) having an end of said electrode (106) disposed therethrough.

5. The flushing and filtering system (100) of any of the preceding claims, further comprising a pressure sensor (134) within said first fluid return path.

6. The flushing and filtering system (100) of any of the preceding claims, wherein said work tank (102) is configured to keep said workpiece (104) completely submerged within said machining fluid.

7. The flushing and filtering system (100) of any of the preceding claims, wherein the work tank (102) is further configured to spray machining fluid on exterior surfaces of said guide bush (108) and said workpiece (104).

8. The flushing and filtering system (100) of claim 7, further comprising a nozzle (113) configured for spraying machining fluid on said exterior surfaces of said guide bush (108) and said workpiece (104), said nozzle (113) included within said second fluid return path (136).

## Patentansprüche

1. Spül- und Filtersystem (100) für eine Elektroerosionsmaschine, aufweisend:
einen Arbeitsbehälter (102), der zum Aufnehmen eines Werkstückes (104) darin ausgestaltet ist;
eine erste Filterstufe (116) zur Grobfilterung von Rückstände enthaltender Bearbeitungsflüssigkeit (110), die aus dem Arbeitsbehälter (102) austritt; und
eine zweite Filterstufe (124) zur Feinfilterung von grob gefilterter Bearbeitungsflüssigkeit (110), die aus der ersten Filterstufe (116) austritt;
eine Hochdruckpumpe (132) zum Zuführen fein gefilterter Bearbeitungsflüssigkeit entlang eines ersten Fluidrücklaufpfades (130) von der zweiten Filterstufe zu dem Arbeitsbehälter (102), wobei der erste Fluidrücklaufpfad (130) einen Hochdruckrücklaufpfad bildet, um fein gefiltertes Bearbeitungsfluid durch eine in der Elektroerosionsmaschine enthaltene Elektrode (106) hindurch einzuführen;
**dadurch gekennzeichnet, dass**
eine Flüssigkeitszugabepumpe (138) zum Zuführen fein gefilterter Bearbeitungsflüssigkeit entlang eines zweiten Fluidrücklaufpfades (136) von der zweiten Filterstufe zu dem Arbeitsbehälter (102) vorgesehen ist, wobei der zweite Fluidrücklaufpfad (136) das fein gefilterte Bearbeitungsfluid durch einen Flüssigkeitszugabeeinlass (112) einführt, der an einem unteren Abschnitt des Bearbeitungsbehälters (102) angeordnet ist, und wobei eine Bodenfläche des Arbeitsbehälters (102) so geneigt ist, dass sie ein Fließen der Rückstände enthaltenden Bearbeitungsflüssigkeit (110) zu einem Auslass (114) unmittelbar auf dem Boden des Bearbeitungsbehälters (102) bewirkt.

2. Spül- und Filtersystem (100) nach Anspruch 1, wobei die erste Filterstufe (116) ferner aufweist:
eine Grobfiltervorrichtung (120) zum Aufnehmen von Rückstände enthaltender Bearbeitungsflüssigkeit (110), die aus dem Arbeitsbehälter (102) austritt;
einen ersten Filterbehälter (118) zum Bereithalten der grob gefilterten Bearbeitungsflüssigkeit (110), die die Grobfiltervorrichtung (120) durchlaufen hat; und
eine Grobfilterpumpe (122) zum Übertragen der grob gefilterten Bearbeitungsflüssigkeit (110) aus dem ersten Filterbehälter (118) an die zweite Filterstufe (124).

3. Spül- und Filtersystem (100) nach Anspruch 2, wobei die zweite Filterstufe (124) ferner aufweist:
eine Feinfiltervorrichtung (128) zum Aufnehmen der aus dem ersten Filterbehälter (118) übertragenen grob gefilterten Bearbeitungsflüssigkeit (110); und
einen Feinfilterbehälter (126) zum Bereithalten der fein gefilterten Bearbeitungsflüssigkeit (110), die die Feinfiltervorrichtung (128) durchlaufen hat.

4. Spül- und Filtersystem (100) nach einem der Ansprüche 1 bis 3, wobei der erste Fluidrücklaufpfad (130) ferner so ausgestaltet ist, dass er die fein gefilterte Bearbeitungsflüssigkeit (110) an eine Führungsbüchse (108) liefert, wobei durch die Führungsbüchse (108) hindurch ein Ende der Elektrode (106) angeordnet ist.

5. Spül- und Filtersystem (100) nach einem der vorstehenden Ansprüche, das ferner einen Drucksensor (134) in dem ersten Fluidrücklaufpfad aufweist.

6. Spül- und Filtersystem (100) nach einem der vorstehenden Ansprüche, wobei der Arbeitsbehälter (102) dafür eingerichtet ist, das Werkstück (104) vollständig in dem Bearbeitungsfluid eingetaucht zu halten.

7. Spül- und Filtersystem (100) nach einem der vorstehenden Ansprüche, wobei der Arbeitsbehälter (102) ferner dafür eingerichtet ist, Bearbeitungsfluid auf Außenoberflächen der Führungsbüchse (108) und des Werkstückes (104) zu sprühen.

8. Spül- und Filtersystem (100) nach Anspruch 7, das ferner eine Düse (113) aufweist, die dafür eingerichtet ist, Bearbeitungsfluid auf die Außenoberflächen der Führungsbüchse (108) und des Werkstückes (104) zu sprühen, wobei die Düse (103) in dem zweiten Fluidrücklaufpfad (136) enthalten ist.

## Revendications

1. Système de rinçage et de filtration (100) pour machine à électro-érosion, comportant :
un bac de travail (102) conçu pour contenir une pièce à usiner (104);
un premier étage de filtration (116) pour une filtration sommaire du liquide d'usinage (110) chargé de résidus qui sort dudit bac de travail (102) ; et
un second étage de filtration (124) pour une filtration poussée du liquide d'usinage a filtration sommaire (110) qui sort dudit premier étage de filtration (116) ;
une pompe à haute pression (132) pour acheminer le liquide d'usinage à filtration poussée sur un premier trajet de retour (130) de liquide depuis le second étage de filtration jusqu'audit bac de travail (102), ledit premier trajet de retour (130) de liquide comprenant un trajet de retour à haute pression servant à introduire un liquide d'usinage à filtration poussée via une électrode (106) incluse dans la machine à électro-érosion ; **caractérisé en ce que**
une pompe d'apport (138) de liquide est prévue pour acheminer un liquide d'usinage à filtration poussée sur un second trajet de retour (136) de liquide depuis le second étage de filtration jusqu'audit bac de travail (102), ledit second trajet de retour (136) de liquide introduisant ledit liquide d'usinage à filtration poussée via une entrée d'apport (112) de liquide disposée dans une partie inférieure dudit bac de travail (102), et une surface inférieure dudit bac de travail (102) étant oblique de manière à amener ledit liquide d'usinage (110) chargé de résidus à s'écouler vers une sortie (114) tout près du fond dudit bac de travail (102).

2. Système de rinçage et de filtration (100) selon la revendication 1, dans lequel ledit premier étage de filtration (116) comprend en outre :
un dispositif de filtration sommaire (120) servant à recevoir le liquide d'usinage (110) chargé de résidus qui sort dudit bac de travail (102) ;
une première cuve de filtration (118) servant à contenir ledit liquide d'usinage à filtration sommaire (110) qui a traversé ledit dispositif de filtration sommaire (120) ; et
une pompe de filtration sommaire (122) servant à transférer ledit liquide d'usinage à filtration sommaire (110) de ladite première cuve de filtration (118) audit second étage de filtration (124).

3. Système de rinçage et de filtration (100) selon la revendication 2, dans lequel ledit second étage de filtration (124) comprend en outre :
un dispositif de filtration poussée (128) servant à recevoir ledit liquide d'usinage à filtration sommaire (110) transféré depuis ladite première cuve de filtration (118) ; et
une cuve de filtration poussée (126) servant à contenir ledit liquide d'usinage à filtration poussée (110) qui a traversé ledit dispositif de filtration poussée (128).

4. Système de rinçage et de filtration (100) selon l'une quelconque des revendications 1 à 3, dans lequel le premier trajet de retour (130) de liquide est en outre conçu de manière à fournir ledit liquide d'usinage à filtration poussée (110) à un canon de guidage (108), une extrémité de ladite électrode (106) étant disposée à travers ledit canon de guidage (108).

5. Système de rinçage et de filtration (100) selon l'une quelconque des revendications précédentes, comportant en outre un capteur de pression (134) sur ledit premier trajet de retour de liquide.

6. Système de rinçage et de filtration (100) selon l'une quelconque des revendications précédentes, dans lequel ledit bac de travail (102) est conçu pour maintenir ladite pièce à usiner (104) complètement immergée dans ledit liquide d'usinage.

7. Système de rinçage et de filtration (100) selon l'une quelconque des revendications précédentes, dans lequel le bac de travail (102) est en outre conçu pour pulvériser un liquide d'usinage sur des surfaces extérieures dudit canon de guidage (108) et de ladite pièce à usiner (104).

8. Système de rinçage et de filtration (100) selon la revendication 7, comportant en outre une buse de pulvérisation (113) conçue pour pulvériser un liquide d'usinage sur lesdites surfaces extérieures dudit canon de guidage (108) et de ladite pièce à usiner (104), ladite buse (113) étant incluse dans ledit second trajet de retour (136) de liquide.
